# FASCICULE DE BREVET EUROPEEN

(11) **EP 0 838 176 B1**
(45) Date de publication et mention de la délivrance du brevet: **19.03.2003**
(21) Numéro de dépôt: 97870165.4
(22) Date de dépôt: 24.10.1997
(51) Int. Cl.: A45B 11/00

(54) **Dispositif de montage de parasols**
Vorrichtung zur Halterung von Sonnenschirmen
Mounting device for parasols

(30) Priorité: 25.10.1996 BE 9600913
(43) Date de publication de la demande: 29.04.1998
(73) Titulaire: Leleu, Peter, 8400 Oostende (BE)
(72) Inventeur: Leleu, Peter, 8400 Oostende (BE)
(74) Mandataire: Van Malderen, Joelle

(56) Documents cités:
- EP-A- 0 194 021
- AU-A- 5 831 865
- DE-A- 3 808 327
- DE-A- 4 105 479
- FR-A- 802 857
- GB-A- 191 211 555
- US-A- 3 297 291

## Description

### Objet de l'invention

La présente invention est relative à un dispositif de montage d'un ou plusieurs parasols, en évitant l'encombrement au sol se produisant lors de l'usage classique des parasols.

### Arrière-plan technologique

Pour la protection contre le soleil, il est habituel d'utiliser des tentes ou bannettes solaires, qui sont des dispositifs fixés à demeure, par exemple sur la façade d'un immeuble, généralement au-dessus d'un balcon ou d'une terrasse, qui permettent de dérouler ou d'enrouler une toile selon les nécessités. Certaines de ces tentes solaires comportent des bras articulés disposés aux deux bords latéraux de la tente, qui soutiennent une traverse sur laquelle est fixée une extrémité de la tente, l'autre extrémité s'enroulant sur un axe logé dans un caisson de protection fixé généralement au mur.

On utilise aussi largement les parasols. Ceux-ci, tout comme les parapluies, sont constitués d'un manche et d'une toile tendue sur une armature pliante fixée de manière articulée sur la partie supérieure du manche et soutenue par une bague coulissant sur ce manche. Il est habituel de prévoir un pied indépendant et relativement lourd pour soutenir ce manche, et très souvent, les parasols sont montés sur des tables telles que des tables de terrasses, pourvues d'une ouverture centrale par laquelle passe le manche. Il est bien connu que les parasols, en fonction de la course du soleil au cours de la journée et de sa hauteur, n'assument généralement qu'imparfaitement leur fonction de protection solaire. Pour assurer une meilleure protection, on a d'ailleurs prévu des parasols dont le manche disposé verticalement sur son pied comporte une partie supérieure inclinable. En cas d'intempéries, en particulier en cas de vent violent, le parasol ouvert tend à se renverser, entraînant généralement la table qui le soutient. Lorsque le soleil disparaît, il est bien entendu possible de replier le parasol, mais celui-ci reste toujours encombrant, puisqu'il occupe le centre de la table. En cas de rangement, par exemple en fin de saison, les pieds sont non seulement difficiles à déplacer, mais sont surtout encombrants.

En usage normal, une terrasse de café, par exemple équipée chaque fois d'un parasol par table, est particulièrement encombrée, sans que l'on obtienne une protection adéquate des utilisateurs tout en devant admettre des difficultés pour le personnel de service.

### Etat de la technique

Le document DE-3808327-A1 décrit un support, formé par un bras articulé, pouvant être monté par une pince à mâchoires sur une table et destiné notamment à un écran d'ordinateur ou similaire. Chaque demi-bras se termine à l'extrémité où est prévue l'articulation par une douille interne et une douille externe de même que par un tourillon monté en rotation sur la douille interne. Les deux extrémités des demi-bras pourvues de ces éléments sont reliées par des plaquettes de connexion. Un tel dispositif n'est pas prévu pour résister à des efforts importants, en particulier des efforts de torsion importants.

Le document US-3297291-A décrit un bras de support articulé pour des dispositifs optiques tels qu'une loupe grossissante, etc., qui sont fixés à l'extrémité d'un bras lui-même monté par exemple sur une table. Ce bras est également articulé et l'articulation est constituée par deux axes parallèles reliés par des éléments de connexion, permettant un mouvement de rotation, similaires aux plaquettes de raccordement décrits dans le document précédent et reliés par une entretoise. A nouveau, ce dispositif est conçu pour soutenir des éléments de poids restreint et n'est pas prévu pour résister à des efforts de torsion.

Le document EP-0194021-A1 décrit un bras articulé de support pour des caméras à usage cinématographique. Le bras est réalisé sous forme d'éléments en forme d'échelle, c'est-à-dire comportant deux montants reliés par des échelons. L'articulation entre chacun des éléments en forme d'échelle est constituée par des roues dentées ou des parties de roues dentées engrenant l'une dans l'autre, les bras étant prévus pour être essentiellement "co-planaires". Ces roues dentées sont maintenues dans la position engrenée par des joints ou plaquettes de recouvrement, elles-mêmes fixées par boulonnage. Dans ce cas également, la résistance à la rotation est relativement faible au niveau de l'articulation.

Le document GB-A-11555 décrit un dispositif pour fixer un parasol, comprenant deux bras, connectés par une articulation. L'articulation permet une rotation des bras, l'un par rapport à l'autre, dans des plans horizontaux parallèles. L'un des bras est fixé à un support adéquat. L'autre porte à son extrémité un parasol. La fixation des articulations est réalisée à l'aide d'un système d'engrenage, ce qui a pour conséquence que la fixation est très rigide et ne permet qu'un nombre fini de positions d'un bras par rapport à l'autre.

Le document AU-58318/65-A décrit une porte de garage articulée. L'articulation qui permet de replier les différents panneaux qui constituent la porte est formée par deux axes pourvus de cannelures pouvant engrener l'un dans l'autre et maintenus également aux deux extrémités par des plaquettes reliées par boulonnage. Ce montage est prévu pour une fonction essentiellement différente de celle envisagée par la présente invention.

### Buts de l'invention

L'invention vise à fournir un support amélioré pour un ou plusieurs parasols, qui combine au moins en partie les avantages des tentes ou bannettes solaires, à savoir leur stabilité et leur absence d'encombrement, avec les avantages des parasols classiques, c'est-à-dire le fait qu'ils sont relativement bon marché et qu'ils sont faciles à orienter et à déplacer et que l'on peut ranger aisément, par exemple en fin de saison d'été.

On vise tout particulièrement à fournir un dispositif qui ne nécessite pas de modification intrinsèque des parasols classiques, mais qui permet notamment d'éviter le recours à un pied de maintien, généralement lourd et encombrant.

Un but particulier visé est la possibilité de protéger de manière efficace plusieurs tables sur une terrasse, par exemple une terrasse de café, sans encombrement majeur de l'espace et en gardant l'aspect esthétique typique des parasols, en particulier en réalisant un aspect esthétique amélioré par rapport aux dispositions classiques des parasols.

Une considération constructive importante est le fait que l'effet du vent sur le parasol peut exercer un effort de torsion important auquel le support doit pouvoir résister.

### Eléments caractéristiques de l'invention

Les différents éléments caractéristiques de l'invention sont repris dans les revendications qui suivent.

### Brève description des dessins

- La figure 1: représente schématiquement la fixation d'un parasol par un bras articulé en deux parties principales, le bras étant fixé à une extrémité sur un mur.
- La figure 2: représente une vue en perspective du bras articulé correspondant à celui de la figure 1.
- Les figures 3 et 4: illustrent respectivement selon une vue de profil et une vue en élévation, une forme d'exécution particulière dans laquelle plusieurs parasols sont fixés sur un support unique sous forme d'un mât central.
- La figure 5: illustre la possibilité de déplacer le parasol maintenu par un bras sur un mur en fonction de la position du soleil.
- La figure 6: représente le bras articulé de la figure 2 en position repliée.
- La figure 7: illustre la forme d'exécution particulière représentée aux figures 3 et 4 lorsque les bras articulés sont en position repliée.
- La figure 8: représente une vue en perspective d'une articulation entre deux parties d'un bras.
- La figure 9: représente une vue "éclatée" d'une articulation du même type que celui de la figure 8 montée à l'extrémité d'une partie de bras prévue pour être fixée sur un mur.

### Description de formes d'exécution préférées de l'invention

L'invention sera décrite plus en détails en référence à des formes d'exécution préférées de l'invention données à titre d'illustration sans caractère limitatif.

Des repères de référence identiques sont utilisés dans les différentes figures pour des éléments identiques ou fonctionnellement similaires.

Les différentes formes d'exécution de l'invention reposent sur un concept de base, à savoir un bras articulé constitué au moins par deux parties de bras solidarisées entre elles par une articulation résistant à la torsion, une extrémité du bras étant fixée à un support fixe, de préférence par une articulation supplémentaire et l'autre extrémité du bras éventuellement avec interposition d'une autre articulation supplémentaire étant pourvue d'un organe de maintien pour recevoir le manche d'un parasol, chaque articulation étant équipée d'un dispositif de blocage rapide.

La difficulté majeure d'exécution dans ce type de construction est le fait que l'articulation, par exemple en cas de vent violent, est soumise à des efforts considérables de torsion. On s'est aperçu que ce problème spécifique peut être résolu en constituant l'articulation sous forme de deux cylindres cannelés engrenant l'un par rapport à l'autre, fixés à l'extrémité de la partie de bras et maintenus en position d'engrènement par deux plaquettes latérales perforées, un dispositif de fixation, notamment par boulonnage, assurant la solidarisation des extrémités de plaquettes respectives au cylindre cannelé correspondant.

Le dispositif de fixation est équipé d'un élément à mouvement excentrique assurant le blocage de l'ensemble.

Lorsque ces conditions sont réalisées, les buts visés par l'invention peuvent être facilement atteints, ainsi qu'il apparaîtra de la description qui suit.

En principe, le bras est constitué en deux parties ou en trois parties principales reliées par des articulations. Plus de trois parties principales articulées pour le bras ne sont généralement pas nécessaires.

Le support fixe du bras peut être constitué soit par un mur, soit par un mât fixé solidement au sol, étant entendu qu'un support fixe unique peut être équipé d'un ou en principe, sauf limitation d'encombrement, de plusieurs supports de parasol. Un nombre de parasols allant de 1 à 5 convient généralement dans le cas d'un mât de support.

Un dispositif à levier agissant sur un excentrique de blocage s'est révélé particulièrement utile dans le cadre de l'invention, non seulement pour bloquer les articulations, mais aussi pour serrer le manche du parasol sur une fixation à l'extrémité libre du bras.

Il convient de noter que le parasol peut être de dimensions et de formes largement quelconques. En particulier, on n'est pas limité à une forme ronde, mais une forme carrée ou rectangulaire, pour autant que les armatures qui font partie intégrale du parasol le permettent, est possible.

Dans le cas d'une forme rectangulaire du parasol, lorsqu'il est relié par le bras articulé à un mur et qu'il est inclinable, on peut pratiquement l'utiliser de la même manière qu'une tente solaire.

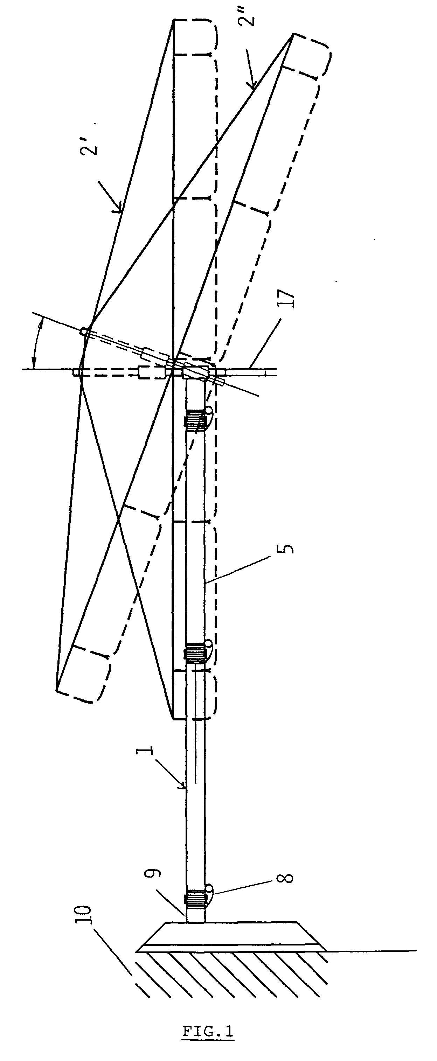

Afin d'illustrer une première forme d'exécution de l'invention, on a indiqué schématiquement à la figure 1 la fixation d'un parasol par un bras articulé en deux parties principales, le bras étant fixé à une extrémité sur un mur.

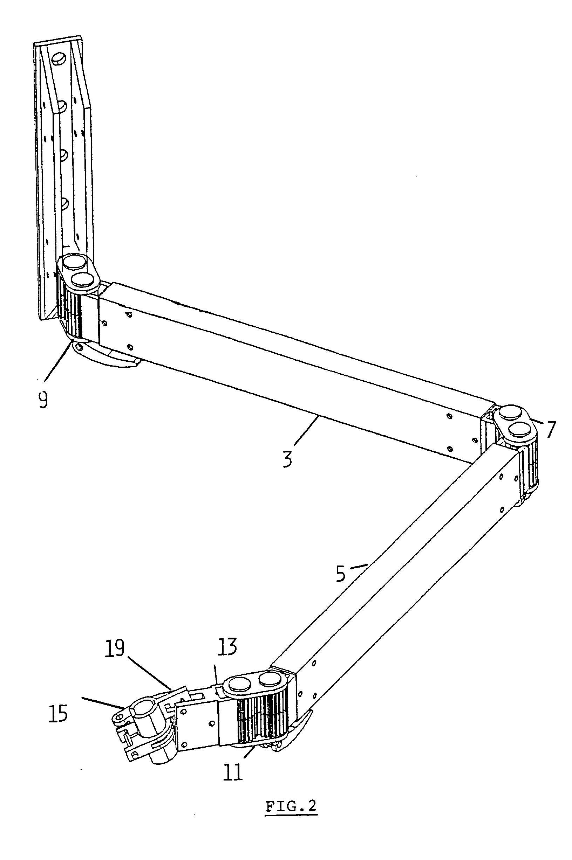

La figure 2 est une vue en perspective de ce bras.

Dans le cas particulier, le support portant le repère général 1 est destiné à un parasol qui porte le repère général 2. On a cependant représenté ce parasol en deux positions d'inclinaisons différentes (illustrées par 2' et 2'') à la figure 1, les rotules ou équipements similaires pour réaliser cette inclinaison d'un parasol étant classiques.

Le bras 1 est constitué par une partie 3 et une partie 5, ces parties étant reliées par une articulation 7.

Une articulation 8 supplémentaire est prévue à proximité de l'extrémité qui sera fixée au mur 10. La fixation au mur s'effectue par un élément de raccord 9 qui est maintenu sur un mur par tout moyen approprié, notamment par un dispositif facile à démonter.

De même, une autre articulation 11 supplémentaire assure la connexion avec une pièce de raccord 13. Dans le cas représenté, une pièce de maintien 15 est conçue de manière à pouvoir fixer le manche 17 du parasol par des mâchoires. Il convient de noter que ce manche 17 est un manche plus court que celui généralement utilisé pour des parasols montés sur des tables et qui sont habituellement fixés à leur base par un pied de fixation (on peut bien entendu utiliser un parasol classique dont le manche a été scié pour le raccourcir). Dans le cas particulier, le manche peut être incliné par rapport à la verticale à l'aide d'un élément de pivotement ou rotule blocable 19 de la manière classique.

La conception même de l'articulation (applicable aussi bien pour l'articulation 7 que pour les articulations 9 et 11), sera décrite ultérieurement. On notera cependant déjà que chacune de ces articulations est cependant pourvue d'un élément de blocage, qui est du type élément de blocage rapide à excentrique.

La fixation du support n'est cependant pas limitée à une fixation sur un mur. Bien au contraire, et ceci constitue une forme d'exécution particulièrement intéressante de l'invention, il et possible de fixer plusieurs parasols, chaque fois à l'intervention d'un bras de support spécifique à chaque parasol sur un mât central.

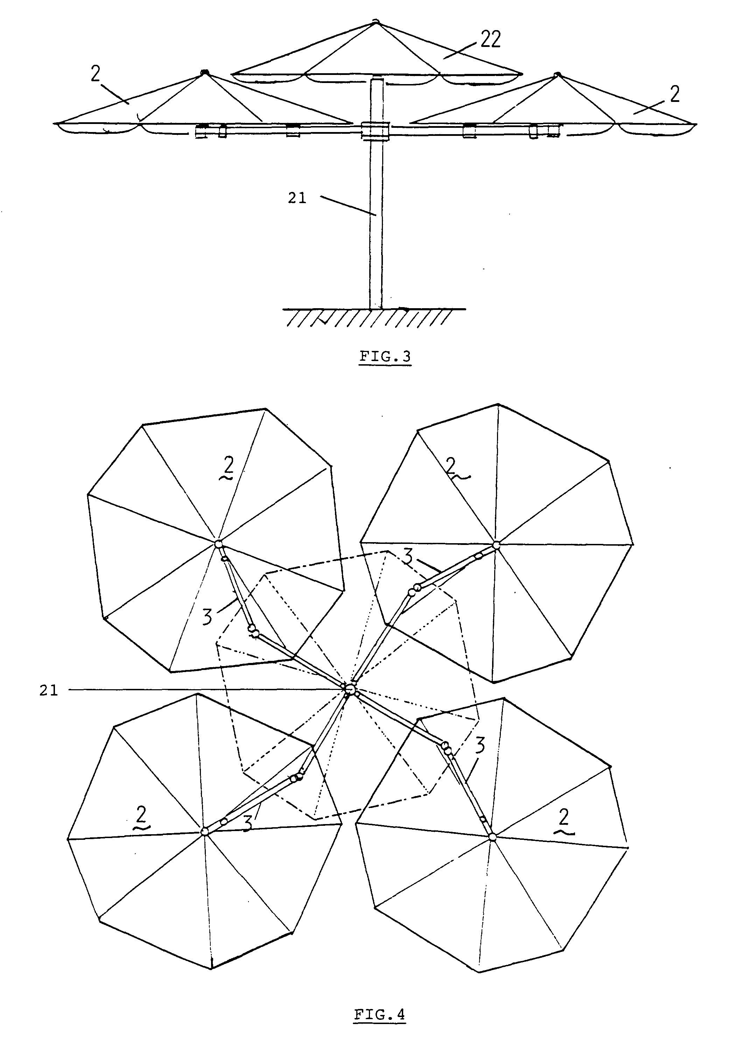

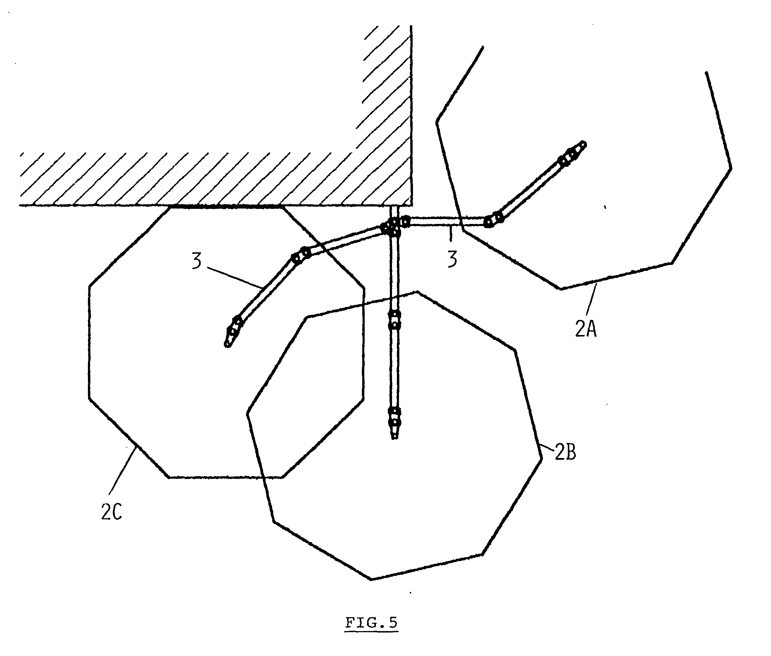

Les figures 3 et 4 illustrent cette façon d'opérer.

Dans cette forme d'exécution, un mât central 21 fixé solidement au sol, par exemple sur une terrasse, supporte quatre bras articulés 3 portant chaque fois à leur extrémité un parasol 2. Sur le mât central 21 est prévu un parasol 22 qui ne doit pas être articulable et qui, ainsi que l'indiquent les figures 3 et 4, surmonte et recouvre partiellement les parasols 2.

La figure 5 illustre la façon-dont à l'aide d'un seul bras articulé 3 fixé sur un mur, il est possible, par exemple sur le coin d'un immeuble, de déplacer le parasol qu'il soutient depuis une position, illustrée par la position 2a en passant par la position 2b pour atteindre finalement la position 2c en fonction de la position du soleil au cours de la journée.

L'intérêt du support selon l'invention, et ceci dans toutes les configurations décrites en rapport avec les figures 1 à 5 et d'autres configurations que l'on pourrait imaginer, est le fait que l'on peut s'adapter à de nombreuses exigences, modifier aisément la position du parasol en fonction des besoins, et également que le rangement est particulièrement simple. En effet, il suffit de libérer les mâchoires de maintien 15 et de replier le parasol pour ranger aisément celui-ci.

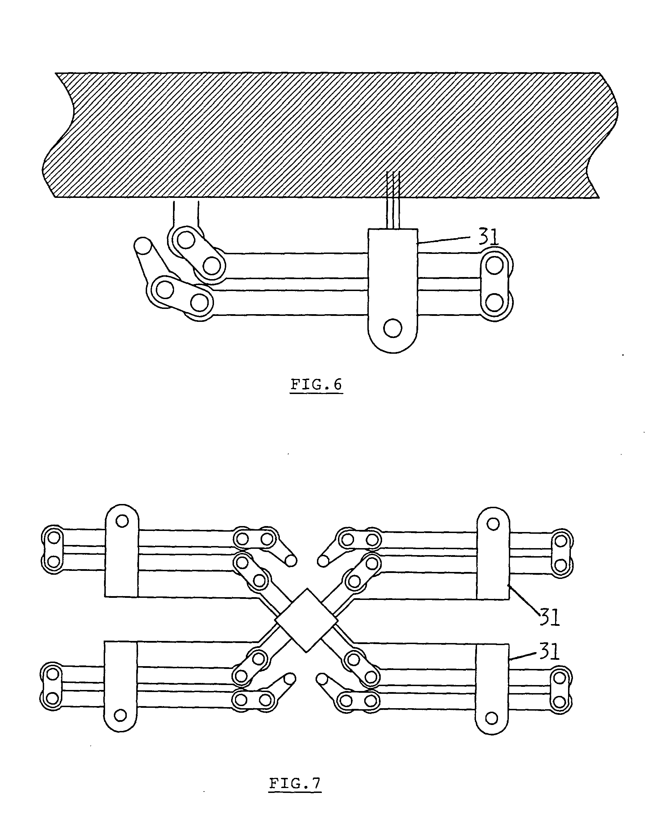

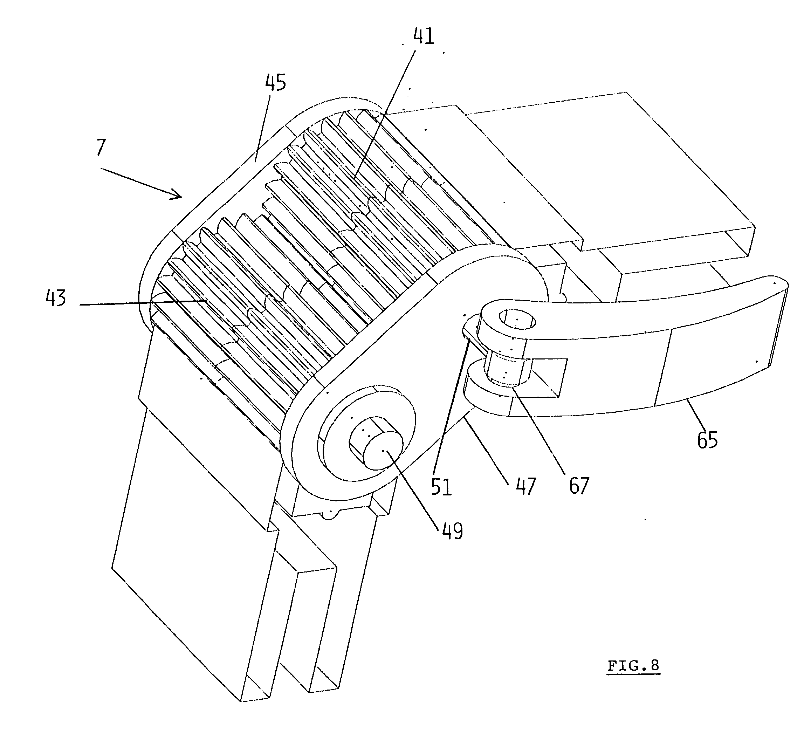

Ensuite, en libérant les dispositifs de blocage des articulations, il est très facile de rabattre en position pliée les parties constitutives du bras articulé. La figure 6 6 illustre la façon dont le bras articulé peut être replié contre un mur et la figure 7 la façon dont le dispositif représenté aux figures 3 et 4 permet un pliage aisé.

En principe, le blocage des excentriques de fixation permet de maintenir le bras replié contre le mur comme l'illustre la figure 6 ou les différents bras en position de pliage comme l'illustre la figure 7.

Avantageusement, l'équipement comporte cependant un étrier 31 qui assure un maintien complémentaire de l'ensemble.

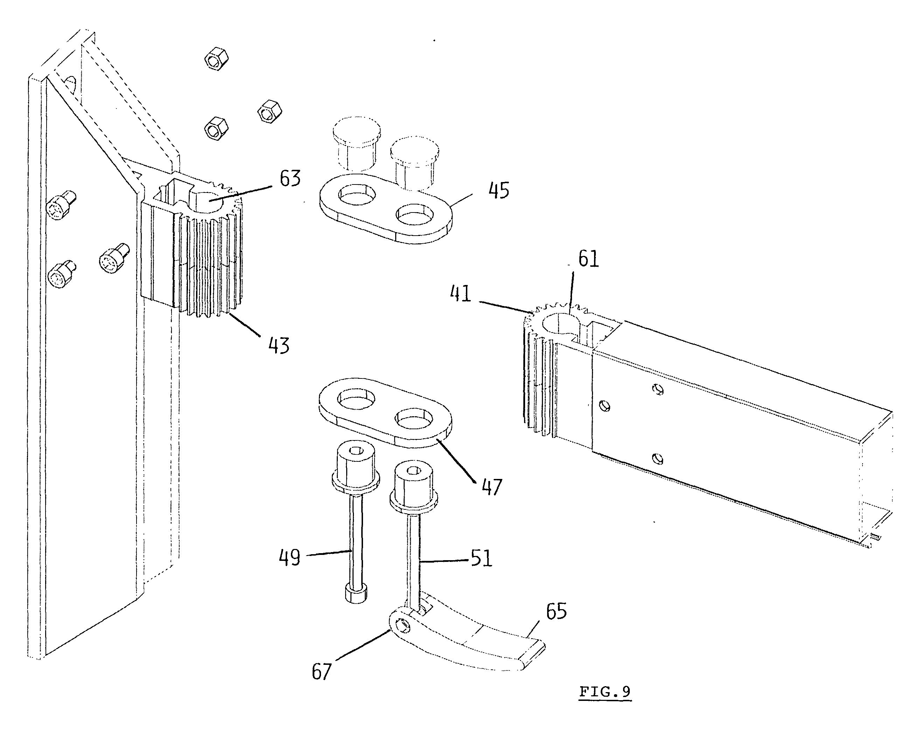

Dans la forme d'exécution représentée aux figures 8 et 9, des détails constructifs pour les articulations utilisées selon l'invention sont indiqués.

Dans le cas de la figure 8, on a représenté une articulation telle que l'articulation 7 entre deux parties d'un bras et dans le cas de la figure 9, une articulation telle que l'articulation 8 prévue pour le raccordement d'une partie de bras 3 sur un mur 10. Le principe même de l'articulation est bien entendu identique dans les deux formes d'exécution.

L'articulation représentée comporte deux éléments partiellement cylindriques et cannelés 41 et 43 qui peuvent engrener l'un dans l'autre. La forme cylindrique peut n'être que partielle pour autant qu'elle permette un mouvement de pivotement suffisant. Afin de maintenir ensemble les éléments 41 et 43, on a prévu deux plaquettes 45 et 47, chacune de ces plaquettes étant pourvue de deux perforations. Des tiges 49 et 51 sont prévues pour maintenir en place les plaquettes 45 et 47 et par conséquent, solidariser les éléments de l'articulation.

Chacun des éléments partiellement cylindriques cannelés 41 et 43 comporte un alésage 61 et 63 de manière qu'en position assemblée, les éléments 41 et 43 engrènent l'un sur l'autre, et que les tiges 49 et 51 maintiennent en place les plaquettes 45 et 47 par tout moyen approprié, par exemple par boulonnage.

Un levier 65 permet d'actionner un système de blocage 65 par un axe excentrique disposé sur l'extrémité de la tige 51.

Ceci permet de bloquer l'articulation en une position quelconque souhaitée.

Bien qu'on ait décrit les formes d'exécution préférées de l'invention, il doit être bien entendu que de nombreuses modifications, tant dans la forme que dans les dimensions restent possibles, si elles restent dans le cadre des revendications

## Revendications

1. Dispositif de montage d'un ou plusieurs parasols (2), comprenant un bras articulé (1) constitué au moins par deux parties (3, 5) de bras, chaque pair de parties (3,5) de bras adjacentes étant solidarisées entre elles par une articulation (7) qui résiste à la torsion, une extrémité du bras étant fixée à un support fixe (10 ou 21) et l'autre extrémité du bras étant pourvue d'un organe de maintien (13, 15) pour recevoir le manche (17) d'un parasol (2), chaque articulation (7) étant équipée d'un dispositif de blocage rapide (65, 67),
**caractérisé en ce que** les articulations (7) sont réalisées sous forme de deux cylindres cannelés (41, 43) engrenant l'un par rapport à l'autre, ayant des cannelures sur toute leur longueur, fixés aux deux extrémités des parties (3,5) de bras et maintenus en position d'engrènement par deux plaquettes latérales perforées (45, 47), deux tiges (49, 51) étant pourvues pour assurer la solidarisation des extrémités de plaquettes respectives au cylindre cannelé correspondant, ledit dispositif de blocage rapide comprenant un axe excentrique disposé sur l'extrémité d'une des deux tiges (49, 51), ledit dispositif de blocage étant actionné par un levier (65).

2. Dispositif selon la revendication 1,
**caractérisé en ce que** l'extrémité du bras fixée au support fixe (10 ou 21) comporte une articulation (8) supplémentaire du même type que l'articulation entre deux parties (3,5) de bras et équipée du même dispositif de blocage rapide (65,67).

3. Dispositif selon la revendication 1 ou 2,
**caractérisé en ce que** l'extrémité du bras pourvue de l'organe de maintien (13, 15) comporte une articulation supplémentaire (11) du même type que l'articulation entre deux parties (3,5) de bras et équipée du même dispositif de blocage rapide (65,67).

4. Dispositif selon l'une quelconque des revendications précédentes, **caractérisé en ce que** le bras articulé est constitué en deux parties ou en trois parties principales reliées par des articulations (7).

5. Dispositif selon l'une quelconque des revendications précédentes, **caractérisé en ce que** le support fixe du bras est constitué par un mur (10) ou par un mât (21) fixé solidement au sol.

6. Dispositif selon l'une quelconque des revendications précédentes, **caractérisé en ce qu'**à un mât (21) sont fixés plusieurs bras articulés supportant chacun un parasol, ces parasols étant surmontés d'un parasol fixé directement au mât.

7. Dispositif selon l'une quelconque des revendications précédentes, **caractérisé en ce que** l'organe de maintien (13, 15) du parasol (2) permet d'incliner celui-ci par rapport au bras articulé (1).

## Claims

1. A device for mounting one or more parasols (2), comprising a hinged arm (1) consisting of at least two arm parts (3, 5), each pair of adjacent arm parts (3, 5) being connected to each other by means of a twist resistant hinge (7), an arm end being attached to a stationary support (10 or 21) and the other arm end being provided with a holding element (13, 15) for accommodating the handle (17) of a parasol (2), each hinge (7) being provided with a quick locking device (65, 67), **characterized in that** the hinges (7) are made in the form of two fluted cylinders (41, 43) engaging each other, having flutings over their whole length, attached to both ends of the arm parts (3, 5) and held in engaging position through two perforated side plates (45, 47), two rods (49, 51) being provided for ensuring the connection of the respective plate ends to the corresponding fluted cylinder, said quick locking device comprising an eccentric axis located on the end of one of the two rods (49, 51), said locking device being actuated by a lever (65).

2. A device according to claim 1, **characterized in that** the arm end attached to the stationary support (10 or 21) comprises an additional hinge (8) of the same type as the hinge between two arm parts (3, 5) and provided with the same quick locking device (65, 67).

3. A device according to claim 1 or 2, **characterized in that** the arm end provided with the holding element (13, 15) comprises an additional hinge (11) of the same type as the hinge between two arm parts (3, 5) and provided with the same quick blocking device (65, 67).

4. A device according to any one of the preceding claims, **characterized in that** the hinged arm consists of two main parts or three main parts connected by hinges (7).

5. A device according to any one of the preceding claims, **characterized in that** the stationary support of the arm consists of a wall (10) or a post (21) securely attached to the ground.

6. A device according to any one of the preceding claims, **characterized in that** several hinged arms supporting each one parasol are attached to a post (21), said parasols being surmounted by a parasol directly attached to the post.

7. A device according to any one of the preceding claims, **characterized in that** the parasol (2) holding element (13, 15) makes it possible to incline it relative to the hinged arm (1).

## Patentansprüche

1. Vorrichtung zur Montage von einem oder von mehreren Sonnenschirmen (2), die einen Gelenkarm (1) aufweisen, der aus mindestens zwei Armteilen (3, 5) besteht, wobei jedes Paar von benachbarten Armteilen (3, 5) durch ein gegen Verdrehung widerstandsfähiges Gelenk (7) untereinander verbunden sind, wobei ein Ende des Armes an einem feststehenden Träger (10 oder 21) befestigt ist und das andere Ende des Armes zum Zwecke der Aufnahme der Stange (17) eines Sonnenschirms (2) mit einem Halteorgan (13, 15) ausgestattet ist, wobei jedes Gelenk (7) mit einer Vorrichtung zur Schnellblockierung (65, 67) ausgestattet ist, **dadurch gekennzeichnet, dass** die Gelenke (7) in der Form von zwei geriffelten Zylindern (41, 43) ausgeführt sind, welche ineinander greifen, welche über ihre ganze Länge Rillen aufweisen, welche an den zwei Enden der Armteile (3, 5) befestigt sind und welche in der Position des Eingriffs durch zwei seitliche durchbohrte Plättchen (45, 47) gehalten werden, wobei zwei Stifte (49, 51) vorgesehen sind, um die Verbindung der Enden der jeweiligen Plättchen mit dem entsprechenden geriffelten Zylinder zu gewährleisten, wobei die besagte Vorrichtung zur Schnellblockierung eine exzentrische Achse aufweist, die an dem Ende eines der beiden Stifte (49, 51) vorgesehen ist, wobei die besagte Vorrichtung zur Schnellblockierung durch einen Hebel (65) betätigt wird.

2. Vorrichtung gemäss Anspruch 1, **dadurch gekennzeichnet, dass** das an dem feststehenden Träger (10 oder 21) befestigte Ende des Armes ein zusätzliches Gelenk (8) von derselben Art wie das Gelenk zwischen zwei Armteilen (3, 5) aufweist und das mit derselben Vorrichtung zur Schnellblockierung (65, 67) ausgestattet ist.

3. Vorrichtung gemäss Anspruch 1 oder 2, **dadurch gekennzeichnet, dass** das mit dem Halteorgan (13, 15) ausgestattete Ende des Armes ein zusätzliches Gelenk (11) von derselben Art wie das Gelenk zwischen zwei Armteilen (3, 5) aufweist und das mit derselben Vorrichtung zur Schnellblockierung (65, 67) ausgestattet ist.

4. Vorrichtung gemäss irgendeinem der vorhergehenden Ansprüche, **dadurch gekennzeichnet, dass** der Gelenkarm aus zwei Teilen oder aus drei Hauptteilen besteht, die durch Gelenke (7) miteinander verbunden sind.

5. Vorrichtung gemäss irgendeinem der vorhergehenden Ansprüche, **dadurch gekennzeichnet, dass** der feststehende Träger des Armes aus einer Mauer (10) oder aus einem fest mit dem Boden verbundenen Mast (21) besteht.

6. Vorrichtung gemäss irgendeinem der vorhergehenden Ansprüche, **dadurch gekennzeichnet, dass** an einem Mast (21) mehrere Gelenkarme befestigt sind, von denen ein jeder einen Sonnenschirm trägt, wobei diese Sonnenschirme von einem direkt an dem Mast befestigten Sonnenschirm überragt werden.

7. Vorrichtung gemäss irgendeinem der vorhergehenden Ansprüche, **dadurch gekennzeichnet, dass** das Halteorgan (13, 15) des Sonnenschirms (2) es erlaubt, diesen gegenüber dem Gelenkarm zu neigen.
